(19) **Europäisches Patentamt / European Patent Office / Office européen des brevets**

(11) **EP 2 678 918 B1**

(12) **EUROPEAN PATENT SPECIFICATION**

(45) Date of publication and mention
of the grant of the patent:
**11.05.2016 Bulletin 2016/19**

(21) Application number: **12711207.6**

(22) Date of filing: **23.02.2012**

(51) Int Cl.:
**H02J 3/14** (2006.01)

(86) International application number:
**PCT/GB2012/050417**

(87) International publication number:
**WO 2012/114114 (30.08.2012 Gazette 2012/35)**

(54) **VIRTUAL POWER STATION**

VIRTUELLES KRAFTWERK

CENTRALE ÉLECTRIQUE VIRTUELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.02.2011 GB 201103161**

(43) Date of publication of application:
**01.01.2014 Bulletin 2014/01**

(73) Proprietor: **Open Energi Limited
London WC1V 7JH (GB)**

(72) Inventors:
• **CARVER, Andrew John
London EC4A 3BG (GB)**
• **WARREN, Joseph Daniel
London EC4A 3BG (GB)**
• **BLOOR, Katie
London EC4A 3BG (GB)**

(74) Representative: **Perkins, Sarah et al
Stevens Hewlett & Perkins
1 St Augustine's Place
Bristol BS1 4UD (GB)**

(56) References cited:
**WO-A1-2010/069316      WO-A2-98/21803
WO-A2-2006/128709      GB-A- 2 361 118
US-A1- 2004 254 654**

• **WEI LI ET AL: "Online Detection of Start Time and Location for Hypocenter in North America Power Grid", IEEE TRANSACTIONS ON SMART GRID, IEEE, USA, vol. 1, no. 3, 1 December 2010 (2010-12-01), pages 253-260, XP011314175, ISSN: 1949-3053**
• **VINNAKOTA ET AL: "Managing contingencies in real time using EMS advanced network applications", 2009 IEEE POWER & ENERGY SOCIETY GENERAL MEETING (PES), 10903281, 2009, pages 1-5, XP002687390, Piscataway, NJ, USA DOI: 10.1109/pes.2009.5275505**

**Description**

**Field of the invention**

The present invention relates to a virtual power station for supplying electrical power to one or more power consuming devices across a supply network. The virtual power station of the present invention comprises one or more power generating devices coupled to one or more power consuming devices that are adapted to vary their power consumption so that the virtual power station exhibits load following properties. The present invention also relates to a method of operating the virtual power station so that it exhibits load following characteristics and also relates to a software product for implementing the method. The present invention additionally relates to a load responsive power consuming device for use in the virtual power station.

**Background of the invention**

Performance parameters for conventional power stations include:

(a) cost per kiloWatt-hour (kW) generation of electrical energy;
(b) initial investment cost per kW generating capacity;
(c) temporal responsiveness; and
(d) environmental impact.

Temporal responsiveness is a measure of the speed with which the power output of a power station can be adjusted. For example, nuclear reactors have poor temporal responsiveness whereas gas fired power stations have good temporal responsiveness.

It is conventional practice in technologically-developed countries for their electric power distribution networks, also referred as electrical power grids, to have different types of electrical power generating plants supplying electric power to a network. Such electrical power generating plants may include, for example, coal fired generators, oil fired generators, gas fired generators, hydroelectric generators, wind turbine generators and solar cell generators. Having different types of power generating plants supplying power to a power distribution network can smooth fluctuations with respect to time in the power supply that might otherwise arise from fluctuations in the power output of individual power generating plants. Such fluctuations may result from, for example, changes in wind velocity in the case of wind turbines, or changes in cloud cover in the case of solar cells. Similarly, electrical power demand on a power distribution network is also susceptible to fluctuation, for example in Northern Europe usually there is higher power consumption in wintertime than in summertime on account of the use of electrical heating appliances.

Managing electrical power distribution networks and the electrical power generators coupled to the networks is a complex task not least because of the need to respond to unpredictable and dynamically varying imbalances that can arise between available coupled generating capacity and electrical power demand. It is conventional practice to allow the alternating frequency of the electrical power distribution networks to vary from a nominal value, for example 50.0 Hz, as a result of imbalances between the supply of electrical power from the generators and consumer demand.

**Description of the related art**

WO 2006/128709 ("Grid Responsive Control Device"; inventor - David Hirst) describes the use of autonomously-controlled power consuming devices in an electrical power distribution network for the provision of responsive load performance. US 2004/254654 (Donnelly Matthew K et al) describes electrical energy consumption control methods and systems that adjust the electrical energy consumed by power consuming devices in response to changes in the monitored electrical energy of a power distribution system. This prior art is reflected by the preamble of claims 1 and 12.

However, it can be difficult for an operator of a power distribution network employing autonomously-controlled responsive loads to accurately assess, at any given moment in time, the magnitude of available responsive load capacity. Also, it can be difficult to determine the extent of responsive load service provided by a responsive power consuming device which makes calculating an appropriate financial payment or reward for such responsive load performance very difficult.

Where the autonomously-controlled responsive load is a domestic refrigerator adapted to provide responsive load service, it is reasonable to assume that the refrigerator will be in continuous use after sale for an average lifespan of the refrigerator and so sales records of such responsive load refrigerators can provide an indication of potential available responsive load capacity. However, this approach is less suitable for autonomously-controlled responsive loads that operate in a more intermittent manner. Such intermittent responsive loads include, but are not limited to, plug-in hybrid vehicles which are often charged at night when their batteries and associated battery chargers can provide response load functionality, whereas during the day such vehicles are often being used and so are not coupled to the electrical power distribution network.

One way of addressing this problem is to provide a communication system so that the operator of the electrical power distribution network can remotely control spatially distributed slave power consuming devices from a central location for load balancing the electrical power distribution network. Such an approach is employed in the USA using the Internet as the communication service and is described in "Online Detection of Start Time and Location for Hypocenter n North America Power Grid" (Wei Li *et al*). However, this approach is critically dependent upon the reliability of communication between the network operator and the spatially distributed power consuming devices and so the approach is susceptible to cyberspace attack or other forms of communication disruption.

## Summary of the invention

This object is achieved by providing a virtual power station which is more responsive, more reliable and more robust to potential interruption of communication systems associated with the virtual power station in comparison to known power supply services.

According to a first aspect of the present invention, there is provided a virtual power station according to claim 1, a responsive load for use in a virtual power station as claimed in claim 7, a controller for use in a virtual power station according to claim 10, and a method of operating a virtual power station according to claim 12.

With the present invention the virtual power station is able to perform stabilizing operation of the power distribution network with lower operational uncertainty, in comparison to known conventional power supply services, because the virtual power station is able to verify available responsive load capacity.

Preferably, the physical variable of the electrical power distribution network is a frequency of alternating electrical current or electrical voltage. It is also preferred that the one or more power consuming loads are spatially disposed amongst the one or more power consuming devices.

The controller may be in communication with the at least one responsive load control and the controller may be adapted to issue a request to the at least one responsive load control for a response signature to be executed by the power consuming loads. Also, the responsive load control may be adapted to transmit to the controller an acknowledgement on receipt from the controller of a request for execution of the response signature. Additionally, the controller may be further adapted to communicate to the responsive load control the response signature to be executed by the power consuming loads.

In a preferred embodiment the one or more responsive load controls includes a memory in which is stored one or more response signatures for execution by the power consuming loads and scheduling data identifying when the one or more response signatures are to be executed in future.

In a preferred embodiment the controller is in communication with the one or more power consumption monitors and the one or more power consumption monitors are adapted to communicate the load data to the controller.

Alternatively, the at least one responsive load control may be in communication with a respective one or more power consumption monitors and is adapted to communicate the load data to the controller.

Optionally, the responsive load control may include a sensor for monitoring a local parameter, the responsive load control being adapted to cause execution of the response signature by the power consuming loads when said locally monitored parameter passes a threshold value.

In one embodiment of the virtual power station at least one responsive load control and its respective one or more power consuming devices provide autonomous load response to the electrical power distribution network.

Preferably, the responsive load control is adapted to receive requests from a controller for the response signature to be executed by the one or more power consuming loads. Also, the responsive load control may be further adapted to receive from the controller the response signature to be executed by the power consuming loads.

In a preferred embodiment the responsive load further comprises a memory in which is stored one or more response signatures and schedule data identifying when the one or more response signatures are to be executed in future.

The responsive load may further comprise at least one power consumption monitor for monitoring the power consumption of the one or more power consuming load, and the responsive load control being adapted for communicating to the controller load data representative of monitored changes in the power consumption of the power consuming loads during execution of the response signature.

Preferably the controller is further adapted to communicate with one or more responsive load controls and to issue requests for a response signature to be executed by one or more power consuming loads under the control of the responsive load controls. Also, the controller may be further adapted to communicate to the one or more responsive load controls a response signature to be executed by the one or more power consuming loads.

The method may further comprise the step of the controller issuing a request to the at least one responsive load control for execution of the response signature by the one or more power consuming loads. Optionally, the responsive load control may issue an acknowledgement to the controller on receipt of a request for execution of the response signature by the power consuming loads.

Additionally, the method may further comprise the step of the controller communicating to the at least one responsive load control the response signature to be executed by the power consuming loads.

In a preferred embodiment for a plurality of power consuming loads the method may further comprise dividing the power consuming loads into a plurality of subgroups; causing each sub-group to execute the response signature sequentially; and determining an available responsive load capacity for each sub-group.

Optionally the method may further comprise monitoring a local parameter and causing the power consuming loads to execute the response signature when the locally monitored parameter exceeds a threshold value.

Reference herein to a 'responsive load' is intended as reference to any device coupled to the network that is capable of altering power levels on the network. Hence, the phrase responsive load is intended to encompass industrial plant, industrial electrically powered appliances and domestic electrically powered appliances that draw power from the network and also power generators and other plant, appliances and devices that increase / reduce power supplied to the network.

Also, reference herein to 'available responsive load capacity' is intended to encompass both responsive load capacity information specific in time and responsive load capacity of the virtual power station generally. In the former case the capacity information is preferably obtained substantially in real time and may be collected often and / or regularly over time. In the latter case the capacity information may be collected only once or rarely and / or at irregular intervals.

It will be appreciated that features of the invention are susceptible to being combined in various combinations without departing from the scope of the invention as defined by the appended claims.

## Brief description of the drawings

Embodiments of the present invention will now be described, by way of example only, with reference to the following drawings, wherein:

FIG. 1    is an illustration of a virtual power station pursuant to the present invention;
FIG. 2    is an illustration of another virtual power station pursuant to the present invention;
FIG. 3    is an illustration of a responsive load for use in implementing the virtual power station as illustrated in FIG.1 and FIG. 2; and

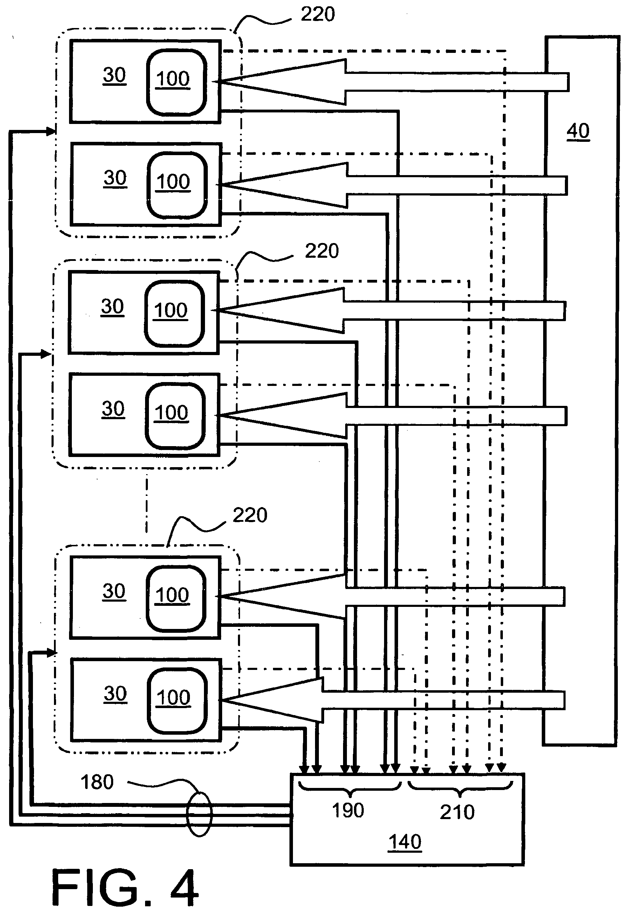

FIG. 4    is an illustration of communication back from response loads for providing confirmation of responsive load functionality provided back to a controlling facility.

In the accompanying drawings an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

## Detailed description of preferred embodiments

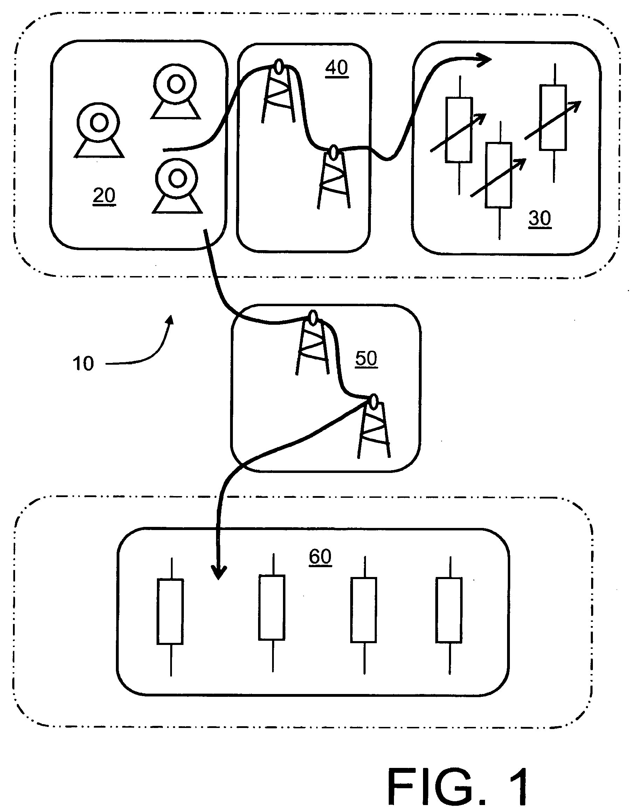

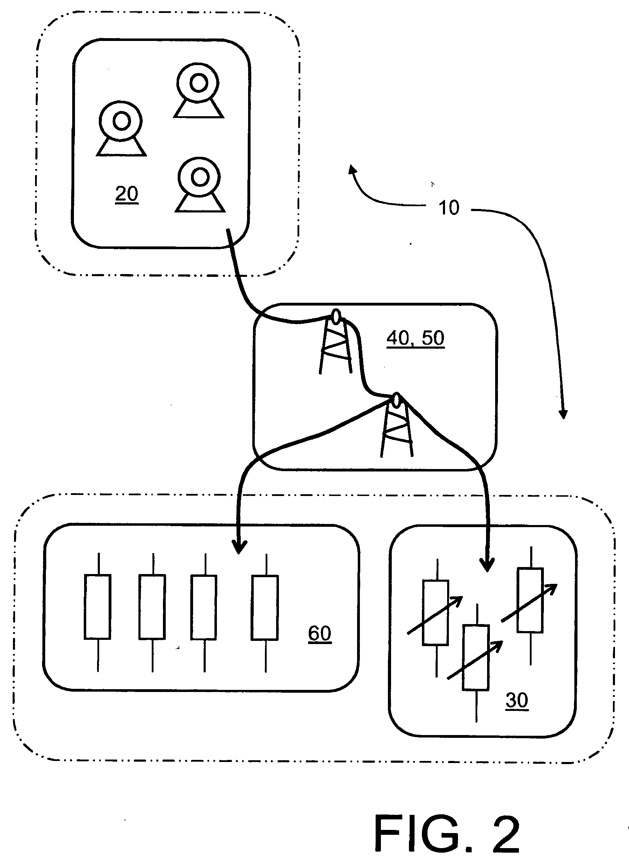

In FIG. 1 a virtual power station is indicated generally by **10** and comprises one or more power generators **20** coupled, via a power coupling network **40,** to one or more power consuming devices adapted to operate as responsive loads **30.** The virtual power station **10** is coupled, via an electrical power distribution network **50,** to one or more spatially distributed power consuming devices **60.** The one or more responsive loads **30** may be spatially remote from the power consuming devices **60** and the power coupling network **40** may be separate from the electrical power distribution network **50,** as shown in FIG. 1. Alternatively, as shown in FIG. 2, the one or more responsive loads **30** and the power coupling network **40** may be spatially distributed amongst the one or more power consuming devices **60** and a common electrical power distribution network **50** supplies power to both the responsive loads **30** and the power consuming devices **60.** In a further alternative (not illustrated) the virtual power station may combine responsive loads **30** spatially remote from the power consuming devices **60** and responsive load devices **30** spatially distributed amongst the power consuming device **60.**

The one or more responsive loads **30** may be autonomous responsive loads such as those described in, but not limited to, WO 2006/128709. An autonomous responsive load **30** is adapted to vary its power consumption independently of external control or command, for the purposes of load balancing the power distribution network. The autonomous responsive load 30 determines whether load balancing is required by monitoring a physical parameter of the power coupling network **40.** A physical parameter of the power coupling network **40** that is suitable for monitoring by the responsive load **30** for the purposes of load balancing is, for example, the alternative operating frequency of the network, substantially 50 Hz in Europe.

Alternatively, the one or more responsive loads **30** may be remotely-controlled. For remotely-controlled responsive loads **30,** their power consumption is varied in response to received commands in the form of power control signals transmitted from a spatially remote location such as a control centre or coordinating centre **140**. The purpose of the coordinating centre **140** is to balance power generation by the one or more power generators **20** with power consumption of the one or more power consuming devices **60** by employing the one or more responsive loads **30** to achieve load following functionality. The coordinating centre **140** may be under the control and operated by the power distribution network operator or may be under the control and operated by a third party delivering responsive load service to the power distribution operator. In a still further alternative, the responsive loads **30** may be adapted to combine both autonomous operation and remote-control operation.

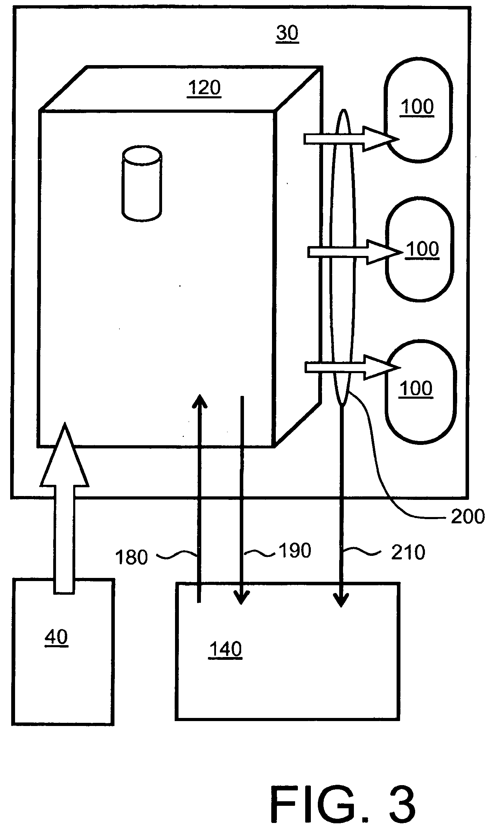

A responsive load is shown in FIG. 3. Each responsive load **30** includes a load controller **120** coupled to the power coupling network **40** and in communication with at least one power consuming element **100**. The load controller **120** is operable to cause its one or more power consuming elements **100** to consume power to a magnitude determined by a monitored physical parameter of the power coupling network **40** and/or in response to remotely transmitted commands received by the load controller **120**. In FIG. 3 the load controller **120** further includes a communications interface **130** for receiving signals **180** from a remote control centre or controller **140** of the virtual power station **10**. The signals **180** may be communicated by the controller or coordinating centre **140** using one or more different communication media, networks and protocols, for example wireless transmission, wired transmission, optical fibre transmission, telephony, satellite, the Internet and so forth. In FIG. 3 two-way communication is shown involving incoming signals **180** to the responsive load and outgoing signals **190** from the responsive load. One-way communication involving only signals **180** from the coordinating centre **140** to the responsive load **30** is also envisaged.

Operation of the virtual power station **10** consists of the one or more generators **20** generating electrical power which is distributed via the networks **40, 50** to the one or more responsive loads **30** and to the one or more power consuming devices **60**. The power output PO from the one or more generators **20** will vary as will the power consumption PC of the one or more power consuming devices **60**. In response to such variation the one or more responsive loads **30** vary their power consumption PR, either autonomously or under remote control, so that a total power consumption of the one or more devices **60** and the one or more loads **30** (PC + PR) is maintained substantially equal to the power output PO from the generators **20**. A frequency deviation $\Delta f_0$ in the nominal operating frequency $f_0$ of the networks **40, 50** is a function G of an imbalance $\Delta P$ between the total power consumption (PC + PR) and the power output PO, as defined by Equation 1 (Eq. 1):

$$\Delta f_0 = G(f_0, \Delta P) \qquad \text{Eq. 1}$$

where $\Delta P$ = PO - (PC + PR), namely

$$\Delta f_0 = G(f_0, (PO - (PC + PR))) \qquad \text{Eq. 2}$$

Thus, the load controllers **120** adjust the power consumption PR of the responsive loads **30** to force the frequency deviation $\Delta f_0$ to zero, whilst G, PO and PC vary in some potentially at least partially unpredictable manner.

It is desirable for the coordinating centre **140** to obtain information regarding the capacity of the one or more responsive loads **30** to vary their power consumption PR, for example when deciding whether or which of the one or more generators **20** is to be adjusted, disconnected or connected to the networks **40, 50**. Such responsive load capacity information is obtained by the coordinating centre **140** transmitting commands **180** to the one or more responsive load devices **30,** via the load controllers **20,** to apply a temporal response signature in a coordinated manner and preferably substantially simultaneously. The temporal response signature consists of a small short term perturbation in the power consumption PR of each responsive load device **30**. This perturbation results in a corresponding signature or perturbation being detectable in a physical parameter or variable of the networks **40, 50,** for example, in the frequency deviation $\Delta f_0$. Even cumulatively, such small, temporally limited perturbation signals do not disrupt operation of the networks **40, 50** and are virtually indiscernible to the one or more power consuming devices **60**. By "small", it is meant less than +/- 10% variation, more optionally less than +/- 5% variation, and most optionally less than +/-1% variation in amplitude for the perturbation signal. To further ensure that the perturbation does not disrupt operation of the networks **40, 50** preferably only a sub-group e.g. 20% of the responsive loads **30** are instructed by the coordinating centre **140** to implement the temporal response signature. The magnitude of the perturbation in the physical parameter of the network is representative of available responsive load capacity and so monitoring of the physical parameter to identify the perturbation enables a measure of responsive load capacity to be extracted.

The responsive load may include memory (not shown) in which is stored one or more temporal response signatures for future execution by the responsive loads 30.

Additionally, the memory may include scheduling data identifying, for example, one or more future dates and times when a response signature is to be executed.

Execution of the response signature causes a corresponding change in power consumption in the one or more responsive loads **30**. This change is monitored or measured using one or more sensors **200** at the one or more responsive loads **30** and communicated as measurement return signals **210** back to the coordinating centre **140** via the communication network. The coordinating centre **140** receives the return signals **210** and aggregates the corresponding measured change in power consumption of the one or more responsive loads **30**. The aggregated measured change in power consumption is a representative value of available responsive load capacity.

Where a remotely transmitted command **180** is to trigger execution of the response signature, a pre-trigger may be transmitted to the responsive loads **30,** in advance of the command, to ensure that the responsive loads **30** are ready to execute the response signature as soon as the trigger is received.

Autonomous responsive loads **30** may be pre-programmed with one or more response signatures as well as dates and times when the response signatures are to be executed. This enables the coordinating centre **140** to determine available responsive load capacity at one or more predetermined dates and times with minimal communication traffic.

Calculation of available responsive load capacity as described above is preferably implemented at the coordinating centre **140** in software consists of a set of program instructions executable by a computing device. The software is preferably stored in tangible memory, for example but not limited to a ROM or other machine-readable data storage media. Similarly, variable data regarding the network and its operation for calculating the load baseline, for example, will be buffered or stored in tangible memory such as RAM or other machine-readable/writable storage media.

Any computing device capable of executing a set of instructions that specify actions to be taken by that device is intended to be encompassed by reference to a computing device. A typical computing device may be exemplified by a processing system that includes one or more processors. The processing system may further include a memory subsystem including RAM and / or ROM and / or other forms of volatile and non-volatile data storage. A bus system may be included for communicating between components. A one-way or two-way communications interface for wired or wireless communication with other remote devices may also be included. It will be understood that the method steps described herein are performed by an appropriate processor (or processors) of a processing device executing instructions stored in tangible memory. The term processor may refer to any device or portion of a device that manages the movement of and processes electronic data from registers and / or memory.

As mentioned earlier, the responsive loads **30** may be subdivided into a plurality of groups for purposes of determining responsive load capacity. Each separate group may execute the response signature **200** at a different predetermined time so that a separate measure of the available responsive load capacity of each group can be determined. This ensures that the perturbation does not become so large as to destabilize the network. The responsive loads may be grouped, for example, into one or more of:

(i) according to type of responsive load **30** involved, for example speed of response;
(ii) geographical location of the responsive loads **30,** for example geographically concentrated clusters of such responsive loads **30;**
(iii) according to financial cost of employing such responsive loads **30** to provide load response;
(iv) depending upon time of day, for example when the responsive loads **30** are implemented using plug-in hybrid vehicles, such vehicles are most likely not to be in use for transportation purposes during night time when they coupled up for recharging purposes;
(v) randomly.

The virtual power station **10** may include a system clock to maintain a common timing for all operational elements of the virtual power station. The commands **180** may then instruct a response signature to be executed at a predetermined future time with respect to the system clock. Alternatively, the one or more responsive loads **30** may be instructed to execute the response signature at a predetermined time interval after receipt of the command **180**. In a still further alternative, the one or more responsive loads **30** may execute the response signature immediately after receiving the command **180.**

Should a portion of the commands **180** not be received at one or more of the responsive loads **30,** any autonomous responsive loads **30** will continue to function to provide responsive load stabilizing functionality irrespective of whether or not they respond to the commands **180**. It is not possible, therefore, for the coordinating centre **140** to overestimate a responsive load capacity whereas additional autonomous dynamic response may be available. Moreover, where command acknowledgements **190** are transmitted by the responsive loads, the coordinating centre **140** is additionally able to determine a potential number of responsive loads **30** actively available from the number of acknowledgements **190** received.

The perturbation response signature indicated in the command **180,** or otherwise invoked by the command, may be but is not limited to: a step change signal, or a signal corresponding to a temporal sequence of step changes of different magnitude, a temporal ramp signal, a temporal sinusoidal signal, a temporal pulse signal.

The response signature may also be executed by the one or more responsive loads **30** in response to a locally monitored condition trigger , for example atmospheric carbon dioxide concentration passing a threshold value; humidity passing a threshold value; atmospheric temperature passing a threshold value; a frequency excursion of the networks **40, 50** passing a threshold frequency; and so forth.

Preferably, the responsive loads **30** are useful facilities and do not merely waste the power they consume. Examples of power consuming devices suitable for use as a responsive load are, but not limited to:

(a) water storage tanks with heaters for use in district heating and/or for a source of energy for heat pumps, swimming pools, industrial and/or domestic water immersion heaters, water pumping schemes for reservoirs and/or irrigation;
(b) desalination plants for generating fresh water from sea water;
(c) arc furnaces, ovens, kilns, chemical processing works, electrolytic tanks;
(d) grain dryers, street lighting, industrial refrigeration plant, ventilation systems;
(e) uninterruptable power supplies (UPS), rechargeable electric vehicles, rechargeable propeller aircraft.

Thus, the virtual power station **10** comprises a population of responsive loads controlled according to one or more electricity grid variables, (for example, in response to one or more of frequency, regulation signal, voltage) wherein a signal is sent to a control system attached to the population of loads indicating:

(a) a pattern for testing to be accepted and executed by the population of loads as if it were the electricity grid variable which is normally controlled or responded to (for example, a grid frequency pattern to be tested against the population of loads); or
(b) a load vector to be achieved by the population of loads, wherein the load vector comprises a series of power levels (for example defined in MegaWatts MW or percentage %), and times at which those power levels are to be achieved.

It is a known problem with the testing of existing demand and response power systems that it is difficult, if not impossible, to input a complicated and dynamic load pattern to the power system. In contrast, with the virtual power station described herein a load pattern and a defined time when the pattern is to be simulated can be communicated to and subsequently executed by the responsive loads and the response of the distribution network to this load pattern monitored.

A load vector can be used to pre-programme the responsive load service where future fluctuations in either power generation or power demand can be predicted. The pre-programming involves communicating the load vector to a group of responsive loads in the virtual power station along with a date and time when the vector is to be executed. The collective execution by the group of responsive loads of the load vector delivers the desired change or changes to the network demand in aggregate. Furthermore, advance notice of the load vector enables the load controller to ensure that the responsive loads are capable of executing the load vector at the specified date and time. Where the responsive loads are autonomous responsive loads, the load vector may be accompanied by a network frequency threshold that overrides execution of the load vector.

Load vectors may also be used to model or simulate a grid event. Such simulations assist in predicting the response of a responsive load population to a changing grid variable and can assist in determining the fitness of the grid to respond, for example, to an emergency.

Modifications to the embodiments described in the foregoing are envisaged without departing from the scope of the invention as defined by the accompanying claims. Expressions such as "including", "comprising", "incorporating", "consisting of", "have", "is" used to describe and claim the present invention are intended to be construed in a non-exclusive manner, namely allowing for items, components or elements not explicitly described also to be present. Reference to the singular is also to be construed to relate to the plural. Numerals included within parentheses in the accompanying claims are intended to assist understanding of the claims and should not be construed in any way to limit subject matter claimed by these claims.

**Claims**

1. A virtual power station (10) for providing electrical power via an electrical power distribution network (40, 50) to one or more power consuming devices (60), the virtual power station (10) including:

one or more electrical power generators (20);
at least one responsive load control (120) having a respective one or more power consuming loads (100), the responsive load control (120) being adapted to control power consumption in the one or more loads (100) with respect to: i) a monitored physical variable of the electrical power distribution network (40, 50) and/or ii) control signals communicated to the responsive load control (120),

the virtual power station (10) being **characterised in that**,

the at least one responsive load control (120) being further adapted to cause the one or more power consuming loads (100) to execute in a coordinated manner a response signature consisting of a small short term perturbation in the power consumption of said one or more power consuming loads; and **in that** it further includes:

one or more power consumption monitors (200) for monitoring changes in the power consumption of the power consuming loads (100) during execution of the response signature by the power consuming loads (100); and

a controller (140) adapted to receive load data (210) representative of monitored changes in the power consumption of the power consuming loads (100) during execution of the response signature in a coordinated manner, the controller (140) being further adapted to determine from said load data (210) an available responsive load capacity.

2. A virtual power station (10) as claimed in claim 1, wherein the physical variable of the electrical power distribution network (40, 50) is a frequency of alternating electrical current or electrical voltage.

3. A virtual power station (10) as claimed in either of claims 1 or 2, wherein the controller (140) is in communication with the at least one responsive load control (120) and the controller (140) is adapted to issue a request to the at least one responsive load control (120) for a response signature to be executed by the power consuming loads (100) and i) the responsive load control (120) is adapted to transmit to the controller (140) an acknowledgement on receipt from the controller (140) of a request for execution of the response signature, and/or ii) the controller (140) is further adapted to communicate to the responsive load control (120) the response signature to be executed by the power consuming loads (100).

4. A virtual power station (10) as claimed in any one of the preceding claims, wherein the controller (140) is in communication with the one or more power consumption monitors (200) and the one or more power consumption monitors (200) are adapted to communicate the load data (210) to the controller (140).

5. A virtual power station (10) as claimed in any one of claims 1 to 3 wherein the at least one responsive load control (120) is in communication with a respective one or more power consumption monitors (200) and is adapted to communicate the load data (210) to the controller (140).

6. A virtual power station (10) as claimed in any one of the preceding claims, wherein the responsive load control (120) includes a sensor for monitoring a local parameter and the responsive load control (120) is adapted to cause execution of the response signature by the power consuming loads (100) when said locally monitored parameter passes a threshold value.

7. A responsive load (30) for use in a virtual power station (10) as claimed in any one of the preceding claims, the responsive load (30) including one or more power consuming loads (100), and a responsive load control (120) adapted to control power consumption in the one or more power consuming loads (100), with respect to: i) a monitored physical variable of the electrical power distribution network (40, 50) and/or ii) control signals communicated to the responsive load control (120), the responsive load control (120) being further adapted to cause the one or more power consuming loads (100) to execute in a coordinated manner a response signature consisting of a small short term perturbation in the power consumption of said one or more power consuming loads.

8. A responsive load (30) as claimed in claim 7, wherein the responsive load control (120) is adapted to receive requests from a controller (140) for the response signature to be executed by the one or more power consuming loads (100) and to receive from the controller (140) the response signature to be executed by the one or more power consuming loads (100).

9. A responsive load (30) as claimed in either of claims 7 or 8, further comprising at least one power consumption monitor (200) for monitoring the power consumption of the one or more power consuming loads (100), and the responsive load control (120) being adapted for communicating to the controller (140) load data (210) representative of monitored changes in the power consumption of the power consuming loads (100) during execution of the response signature.

**10.** A controller (140) for use in a virtual power station (10) as claimed in any one of claims 1 to 6, the controller (140) being adapted to receive load data (210) representative of monitored changes in the power consumption of one or more power consuming loads (100) during execution in a coordinated manner of a response signature consisting of a small short term perturbation in the power consumption of said one or more power consuming loads, and being further adapted to determine from said load data (210) an available responsive load capacity.

**11.** A controller (140) as claimed in claim 10, wherein the controller (140) is further adapted to communicate with one or more responsive load controls (120) and to issue requests for a response signature to be executed by one or more power consuming loads (100) under the control of the responsive load controls (120) and to communicate to the one or more responsive load controls (120) a response signature to be executed by the one or more power consuming loads (100).

**12.** A method of operating a virtual power station (10) comprising one or more electrical power generators (20), the method comprising the step of:

(a) providing at least one responsive load control (120) having a respective one or more power consuming loads (100), the responsive load control (120) being adapted to control power consumption in the one or more loads (100) with respect to: i) a monitored physical variable of the electrical power distribution network (40, 50) and/or ii) control signals communicated to the responsive load control (120),
the method being **characterised in that** it further comprises the steps of,
(b) causing the one or more power consuming loads (100) to execute in a coordinated manner a response signature consisting of a small short term perturbation in the power consumption of said one or more power consuming loads;
(c) monitoring power consumption of the power consuming loads (100) during execution of the response signature;
(d) communicating to a controller (140) load data (210) representative of the monitored power consumption of the power consuming loads (100) during execution of the response signature; and
(e) determining from said load data (210) an available responsive load capacity.

**13.** A method as claimed in claim 12, further comprising the steps of:

(f) the controller (140) issuing a request to the at least one responsive load control (120) for execution of the response signature by the one or more power consuming loads (100); and,
(g) the responsive load control (120) issuing an acknowledgement to the controller (140) on receipt of a request for execution of the response signature by the power consuming loads (100); and/or,
(h) the controller (140) communicating to the at least one responsive load control (120) the response signature to be executed by the power consuming loads (100).

**14.** A method as claimed in either of claims 12 or 13, further comprising the steps of monitoring a local parameter and causing the power consuming loads (100) to execute the response signature when the locally monitored parameter exceeds a threshold value.

**15.** A software product recorded on a machine-readable data carrier, the software product including executable instructions for implementing a method as claimed in any one of claims 12 to 14.

**Patentansprüche**

**1.** Virtuelles Kraftwerk (10) zur Bereitstellung von Elektroenergie über ein Elektroenergieverteilernetz (40, 50) an eine oder mehrere Energie verbrauchende Einrichtungen (60), das virtuelle Kraftwerk (10) enthaltend:

einen oder mehrere Elektroenergiegeneratoren (20);
mindestens eine Ansprechlaststeuerung (120), die jeweilige eine oder
mehrere Energie verbrauchende Lasten (100) aufweisen, wobei die Ansprechlaststeuerung (120) dazu ausgelegt ist, den Energieverbrauch in der einen oder den mehreren Lasten (100) zu steuern im Hinblick auf: i) eine überwachte physikalische Variable des Elektroenergieverteilernetzes (40, 50) und/oder ii) Steuerungssignale, die an die Ansprechlaststeuerung (120) kommuniziert werden,
wobei das virtuelle Kraftwerk (10) **dadurch gekennzeichnet ist, dass** die mindestens eine Ansprechlaststeuerung (120) des Weiteren dazu ausgelegt ist, zu bewirken, dass die eine oder mehreren Energie verbrauchenden Lasten (100) in einer koordinierten Weise eine Ansprechsignatur ausführen, die aus einer kleinen kurzfristigen Perturbation im Energieverbrauch der einen oder mehreren Energie verbrauchenden Lasten besteht; und dadurch, dass es des Weiteren enthält:

eine oder mehrere Energieverbrauchsüberwachungseinrichtungen (200) zum Überwachen von Änderungen im Energieverbrauch der Energie verbrauchenden Lasten (100) während der Ausführung der Ansprechsignatur durch die Energie verbrauchenden Lasten (100); und

eine Steuerungseinrichtung (140), die dazu ausgelegt ist, Lastdaten (210) zu empfangen, die repräsentativ sind für überwachte Änderungen im Energieverbrauch der Energie verbrauchenden Lasten (100) während der Ausführung der Ansprechsignatur in einer koordinierten Weise, wobei die Steuerungseinrichtung (140) des Weiteren dazu ausgelegt ist, aus den Lastdaten (210) eine verfügbare Ansprechlastkapazität zu ermitteln.

2. Virtuelles Kraftwerk (10) gemäß Anspruch 1, wobei die physikalische Variable des Elektroenergieverteilernetzes (40, 50) eine Frequenz von elektrischem Wechselstrom oder elektrischer Wechselspannung ist.

3. Virtuelles Kraftwerk (10) gemäß einem der Ansprüche 1 oder 2, wobei die Steuerungseinrichtung (140) mit der mindestens einen Ansprechlaststeuerung (120) kommuniziert und die Steuerungseinrichtung (140) dazu ausgelegt ist, eine Anforderung an die mindestens eine Ansprechlaststeuerung (120) für eine Ansprechsignatur auszugeben, die durch die Energie verbrauchenden Lasten (100) auszuführen ist, und i) die Ansprechlaststeuerung (120) dazu ausgelegt ist, an die Steuerungseinrichtung (140) eine Bestätigung des Empfangs einer Anforderung zur Ausführung der Ansprechsignatur von der Steuerungseinrichtung (140) zu senden, und/oder ii) die Steuerungseinrichtung (140) des Weiteren dazu ausgelegt ist, die durch die Energie verbrauchenden Lasten (100) auszuführende Ansprechsignatur an die Ansprechlaststeuerung (120) zu kommunizieren.

4. Virtuelles Kraftwerk (10) gemäß einem der vorherigen Ansprüche, wobei die Steuerungseinrichtung (140) mit der einen oder den mehreren Energieverbrauchsüberwachungseinrichtungen (200) kommuniziert und die eine oder die mehreren Energieverbrauchsüberwachungseinrichtungen (200) dazu ausgelegt sind, die Lastdaten (210) an die Steuerungseinrichtung (140) zu kommunizieren.

5. Virtuelles Kraftwerk (10) gemäß einem der Ansprüche 1 bis 3, wobei die mindestens eine Ansprechlaststeuerung (120) mit jeweils einer oder mehreren Energieverbrauchsüberwachungseinrichtungen (200) kommuniziert und dazu ausgelegt ist, die Lastdaten (210) an die Steuerungseinrichtung (140) zu kommunizieren.

6. Virtuelles Kraftwerk (10) gemäß einem der vorherigen Ansprüche, wobei die Ansprechlaststeuerung (120) einen Sensor zur Überwachung eines lokalen Parameters enthält und die Ansprechlaststeuerung (120) dazu ausgelegt ist, die Ausführung der Ansprechsignatur durch die Energie verbrauchenden Lasten (100) zu bewirken, wenn der lokal überwachte Parameter einen Schwellwert passiert.

7. Ansprechlast (30) zur Verwendung in einem virtuellen Kraftwerk (10) gemäß einem der vorherigen Ansprüche, die Ansprechlast (30) enthaltend eine oder mehrere Energie verbrauchende Lasten (100) und eine Ansprechlaststeuerung (120), die dazu ausgelegt ist, den Energieverbrauch in der einen oder den mehreren Energie verbrauchenden Lasten (100) zu steuern im Hinblick auf: i) eine überwachte physikalische Variable des Elektroenergieverteilernetzes (40, 50) und/oder ii) Steuerungssignale, die an die Ansprechlaststeuerung (120) kommuniziert werden, wobei die Ansprechlaststeuerung (120) des Weiteren dazu ausgelegt ist, zu bewirken, dass die eine oder mehreren Energie verbrauchenden Lasten (100) in einer koordinierten Weise eine Ansprechsignatur ausführen, die aus einer kleinen kurzfristigen Perturbation im Energieverbrauch der einen oder mehreren Energie verbrauchenden Lasten besteht.

8. Ansprechlast (30) gemäß Anspruch 7, wobei die Ansprechlaststeuerung (120) dazu ausgelegt ist, Anforderungen von einer Steuerungseinrichtung (140) für die Ansprechsignatur zu empfangen, die durch die eine oder mehreren Energie verbrauchenden Lasten (100) auszuführen ist, und von der Steuerungseinrichtung (140) die durch die Energie verbrauchenden Lasten (100) auszuführende Ansprechsignatur zu empfangen.

9. Ansprechlast (30) gemäß Anspruch 7 oder 8, des Weiteren umfassend mindestens eine Energieverbrauchsüberwachungseinrichtung (200) zum Überwachen des Energieverbrauchs der einen oder mehreren Energie verbrauchenden Lasten (100), und wobei die Ansprechlaststeuerung (120) dazu ausgelegt ist, an die Steuerungseinrichtung (140) Lastdaten (210) zu kommunizieren, die repräsentativ sind für überwachte Änderungen im Energieverbrauch der Energie verbrauchenden Lasten (100) während der Ausführung der Ansprechsignatur.

**10.** Steuerungseinrichtung (140) zur Verwendung in einem virtuellen Kraftwerk (10) gemäß einem der Ansprüche 1 bis 6, wobei Steuerungseinrichtung (140) dazu ausgelegt ist, Lastdaten (210) zu empfangen, die repräsentativ sind für überwachte Änderungen im Energieverbrauch von einem oder mehreren Energie verbrauchenden Lasten (100) während der Ausführung der Ansprechsignatur in einer koordinierten Weise, die aus einer kleinen kurzfristigen Perturbation im Energieverbrauch der einen oder mehreren Energie verbrauchenden Lasten besteht, und die des Weiteren dazu ausgelegt, ist, aus den Lastdaten (210) eine verfügbare Ansprechlastkapazität zu ermitteln.

**11.** Steuerungseinrichtung (140) gemäß Anspruch 10, wobei die Steuerungseinrichtung (140) des Weiteren dazu ausgelegt ist, mit einer oder mehreren Ansprechlaststeuerungen (120) zu kommunizieren und Anforderungen für eine Ansprechsignatur auszugeben, die unter der Steuerung der Ansprechlaststeuerungen (120) durch eine oder mehrere Energie verbrauchenden Lasten (100) auszuführen ist, und an die eine oder mehreren Ansprechlaststeuerungen (120) eine durch die eine oder mehreren Energie verbrauchenden Lasten (100) auszuführende Ansprechsignatur zu kommunizieren.

**12.** Verfahren zum Betreiben eines virtuellen Kraftwerks (10), umfassend einen oder mehrere Elektroenergiegeneratoren (20), das Verfahren umfassend den folgenden Schritt:

    (a) das Bereitstellen mindestens einer Ansprechlaststeuerung (120), die jeweils eine oder mehrere Energie verbrauchende Lasten (100) aufweist, wobei die Ansprechlaststeuerung (120) dazu ausgelegt ist, den Energieverbrauch in der einen oder den mehreren Lasten (100) zu steuern im Hinblick auf: i) eine überwachte physikalische Variable des Elektroenergieverteilernetzes (40, 50) und/oder ii) Steuerungssignale, die an die Ansprechlaststeuerung (120) kommuniziert werden,

    das Verfahren **dadurch gekennzeichnet, dass** es des Weiteren die folgenden Schritte umfasst:

    (b) das Bewirken, dass die eine oder mehreren Energie verbrauchenden Lasten (100) in einer koordinierten Weise eine Ansprechsignatur ausführen, die aus einer kleinen kurzfristigen Perturbation im Energieverbrauch der einen oder mehreren Energie verbrauchenden Lasten besteht;

    (c) das Überwachen des Energieverbrauchs der Energie verbrauchenden Lasten (100) während der Ausführung der Ansprechsignatur;

    (d) das Kommunizieren von Lastdaten (210), die repräsentativ sind für den überwachten Energieverbrauch der Energie verbrauchenden Lasten (100) während der Ausführung der Ansprechsignatur an eine Steuerungseinrichtung (140); und

    (e) das Ermitteln einer verfügbaren Ansprechlastkapazität aus den Lastdaten (210).

**13.** Verfahren gemäß Anspruch 12, des Weiteren umfassend die folgenden Schritte:

    (f) durch die Steuerungseinrichtung (140) das Ausgeben einer Anforderung an die mindestens eine Ansprechlaststeuerung (120) zur Ausführung der Ansprechsignatur durch die eine oder mehreren Energie verbrauchenden Lasten (100); und

    (g) durch die Ansprechlaststeuerung (120) das Ausgeben einer Bestätigung des Empfangs einer Anforderung zur Ausführung der Ansprechsignatur durch die Energie verbrauchenden Lasten (100) an die Steuerungseinrichtung (140); und/oder

    (h) durch die Steuerungseinrichtung (140) das Kommunizieren der durch die eine oder mehreren Energie verbrauchenden Lasten (100) auszuführende Ansprechsignatur an die mindestens eine Ansprechlaststeuerung (120).

**14.** Verfahren gemäß einem der Ansprüche 12 oder 13, des Weiteren umfassend die Schritte des Überwachens eines lokalen Parameters und des Bewirkens der Ausführung der Ansprechsignatur durch die Energie verbrauchenden Lasten (100), wenn der lokal überwachte Parameter einen Schwellwert übersteigt.

**15.** Softwareprodukt, das auf einem maschinell lesbaren Datenträger aufgezeichnet ist, das Softwareprodukt enthaltend ausführbare Anweisungen zur Implementierung eines Verfahrens gemäß einem der Ansprüche 12 bis 14.

**Revendications**

**1.** Une centrale électrique virtuelle (10) pour fournir de l'énergie électrique via un réseau de distribution d'énergie électrique (40, 50) à un ou plusieurs dispositifs consommateurs d'énergie (60), la centrale électrique virtuelle (10) incluant :

un ou plusieurs générateurs d'énergie électrique (20) ;
au moins une commande de charge sensible (120) ayant une ou plusieurs charges consommatrices d'énergie respectives (100), la commande de charge sensible (120) étant conçue pour commander la consommation d'énergie dans la ou les charges (100) par rapport à : i) une variable physique contrôlée du réseau de distribution d'énergie électrique (40, 50) et/ou ii) des signaux de commande communiqués à la commande de charge sensible (120),
la centrale électrique virtuelle (10) étant **caractérisée en ce que**,
ladite au moins une commande de charge sensible (120) étant en outre conçue pour amener la ou les charges consommatrices d'énergie (100) à exécuter d'une manière coordonnée une signature de réponse consistant en une petite perturbation à court terme de la consommation d'énergie de ladite ou desdites charges consommatrices d'énergie ; et **en ce qu'**elle inclut en outre :

un ou plusieurs contrôleurs de consommation d'énergie (200) pour contrôler des changements dans la consommation d'énergie des charges consommatrices d'énergie (100) pendant l'exécution de la signature de réponse par les charges consommatrices d'énergie (100) ; et
un dispositif de commande (140) conçu pour recevoir des données de charge (210) représentatives des changements contrôlés dans la consommation d'énergie des charges consommatrices d'énergie (100) pendant l'exécution de la signature de réponse d'une manière coordonnée, le dispositif de commande (140) étant en outre conçu pour déterminer à partir desdites données de charge (210) une capacité de charge sensible disponible.

2. Une centrale électrique virtuelle (10) comme revendiqué dans la revendication 1, où la variable physique du réseau de distribution d'énergie électrique (40, 50) est une fréquence de courant électrique alternatif ou de tension électrique.

3. Une centrale électrique virtuelle (10) comme revendiqué dans n'importe lesquelles des revendications 1 ou 2, où le dispositif de commande (140) est en communication avec l'au moins une commande de charge sensible (120) et le dispositif de commande (140) est conçu pour envoyer une demande à l'au moins une commande de charge sensible (120) pour une signature de réponse devant être exécutée par les charges consommatrices d'énergie (100) et i) la commande de charge sensible (120) est conçue pour transmettre au dispositif de commande (140) un accusé de réception à réception en provenance du dispositif de commande (140) d'une demande d'exécution de la signature de réponse, et/ou ii) le dispositif de commande (140) est en outre conçu pour communiquer à la commande de charge sensible (120) la signature de réponse devant être exécutée par les charges consommatrices d'énergie (100).

4. Une centrale électrique virtuelle (10) comme revendiqué dans l'une quelconque des revendications précédentes, où le dispositif de commande (140) est en communication avec le ou les contrôleurs de consommation d'énergie (200) et le ou les contrôleurs de consommation d'énergie (200) sont conçus pour communiquer les données de charge (210) au dispositif de commande (140).

5. Une centrale électrique virtuelle (10) comme revendiqué dans l'une quelconque des revendications 1 à 3 où l'au moins une commande de charge sensible (120) est en communication avec un ou plusieurs contrôleurs de consommation d'énergie respectifs (200) et est conçue pour communiquer les données de charge (210) au dispositif de commande (140).

6. Une centrale électrique virtuelle (10) comme revendiqué dans l'une quelconque des revendications précédentes, où la commande de charge sensible (120) inclut un capteur pour contrôler un paramètre local et la commande de charge sensible (120) est conçue pour entraîner l'exécution de la signature de réponse par les charges consommatrices d'énergie (100) lorsque ledit paramètre contrôlé localement dépasse une valeur de seuil.

7. Une charge sensible (30) pour une utilisation dans une centrale électrique virtuelle (10) comme revendiqué dans l'une quelconque des revendications précédentes, la charge sensible (30) incluant une ou plusieurs charges consommatrices d'énergie (100), et une commande de charge sensible (120) conçue pour commander la consommation d'énergie dans la ou les charges consommatrices d'énergie (100), par rapport à : i) une variable physique contrôlée du réseau de distribution d'énergie électrique (40, 50) et/ou ii) des signaux de commande communiqués à la commande de charge sensible (120), la commande de charge sensible (120) étant en outre conçue pour amener la ou les charges consommatrices d'énergie (100) à exécuter d'une manière coordonnée une signature de réponse consistant en une petite perturbation à court terme de la consommation d'énergie de ladite ou desdites charges consommatrices d'énergie.

8. Une charge sensible (30) comme revendiqué dans la revendication 7, où la commande de charge sensible (120) est conçue pour recevoir des demandes en provenance d'un dispositif de commande (140) pour que la signature de réponse soit exécutée par la ou les charges consommatrices d'énergie (100) et pour recevoir en provenance du dispositif de commande (140) la signature de réponse devant être exécutée par la ou les charges consommatrices d'énergie (100).

9. Une charge sensible (30) comme revendiqué dans n'importe lesquelles des revendications 7 ou 8, comprenant en outre au moins un contrôleur de consommation d'énergie (200) pour contrôler la consommation d'énergie de la ou des charges consommatrices d'énergie (100), et la commande de charge sensible (120) étant conçue pour communiquer au dispositif de commande (140) des données de charge (140) représentatives des changements contrôlés dans la consommation d'énergie des charges consommatrices d'énergie (100) pendant l'exécution de la signature de réponse.

10. Un dispositif de commande (140) pour une utilisation dans une centrale électrique virtuelle (10) comme revendiqué dans l'une quelconque des revendications 1 à 6, le dispositif de commande (140) étant conçu pour recevoir des données de charge (210) représentatives de changements contrôlés dans la consommation d'énergie d'une ou plusieurs charges consommatrices d'énergie (100) pendant l'exécution d'une manière coordonnée d'une signature de réponse consistant en une petite perturbation à court terme de la consommation d'énergie de ladite ou desdites charges consommatrices d'énergie, et étant en outre conçu pour déterminer à partir desdites données de charge (210) une capacité de charge sensible disponible.

11. Un dispositif de commande (140) comme revendiqué dans la revendication 10, où le dispositif de commande (140) est en outre conçu pour communiquer avec une ou plusieurs commandes de charge sensible (120) et pour envoyer des demandes pour une signature de réponse devant être exécutée par une ou plusieurs charges consommatrices d'énergie (100) sous la commande des commandes de charge sensible (120) et pour communiquer à la ou aux commandes de charge sensible (120) une signature de réponse devant être exécutée par la ou les charges consommatrices d'énergie (100).

12. Un procédé pour faire fonctionner une centrale électrique virtuelle (10) comprenant un ou plusieurs générateurs d'énergie électrique (20), le procédé comprenant les étapes consistant à :

(a) fournir au moins une commande de charge sensible (120) ayant une ou plusieurs charges consommatrices d'énergie respectives (100), la commande de charge sensible (120) étant conçue pour commander la consommation d'énergie dans la ou les charges (100) par rapport à : i) une variable physique contrôlée du réseau de distribution d'énergie électrique (40, 50) et/ou ii) des signaux de commande communiqués à la commande de charge sensible (120),
le procédé étant **caractérisé en ce qu'**il comprend en outre les étapes consistant à,
(b) amener la ou les charges consommatrices d'énergie (100) à exécuter d'une manière coordonnée une signature de réponse consistant en une petite perturbation à court terme de la consommation d'énergie de ladite ou desdites charges consommatrices d'énergie ;
(c) contrôler la consommation d'énergie des charges consommatrices d'énergie (100) pendant l'exécution de la signature de réponse ;
(d) communiquer à un dispositif de commande (140) des données de charge (210) représentatives de la consommation d'énergie contrôlée des charges consommatrices d'énergie (100) pendant l'exécution de la signature de réponse ; et
(e) déterminer à partir desdites données de charge (210) une capacité de charge sensible disponible.

13. Un procédé comme revendiqué dans la revendication 12, comportant en outre les étapes consistant en :

(f) l'envoi par le dispositif de commande (140) d'une demande à l'au moins une commande de charge sensible (120) pour l'exécution de la signature de réponse par la ou les charges consommatrices d'énergie (100) ; et,
(g) l'envoi par la commande de charge sensible (120) d'un accusé de réception au dispositif de commande (140) à réception d'une demande pour l'exécution de la signature de réponse par les charges consommatrices d'énergie (100) ; et/ou,

(h) la communication par le dispositif de commande (140) à l'au moins une commande de charge sensible (120) de la signature de réponse devant être exécutée par les charges consommatrices d'énergie (100).

14. Un procédé comme revendiqué dans n'importe lesquelles des revendications 12 ou 13, comprenant en outre les étapes consistant à contrôler un paramètre local et amener les charges consommatrices d'énergie (100) à exécuter la signature de réponse lorsque le paramètre contrôlé localement dépasse une valeur de seuil.

15. Un produit logiciel enregistré sur un support de données lisible par une machine, le produit logiciel incluant des instructions exécutables pour implémenter un procédé comme revendiqué dans l'une quelconque des revendications 12 à 14.

# FIG. 1

FIG. 2

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006128709 A

- US 2004254654 A, Donnelly Matthew K